# EUROPÄISCHE PATENTSCHRIFT

(11) **EP 3 131 940 B1**
(45) Veröffentlichungstag und Bekanntmachung des Hinweises auf die Patenterteilung: **27.03.2019**
(21) Anmeldenummer: 15715292.7
(22) Anmeldetag: 15.04.2015
(51) Int. Cl.: C08G 18/48, C08G 18/64, C08G 18/76, C08L 97/02

(54) **HERSTELLVERFAHREN FÜR PRESSWERKSTOFFE**
FABRICATION METHOD FOR COMPRESSED MATERIALS
PROCÉDÉ DE FABRICATION POUR DES MATÉRIAUX COMPRIMÉS

(30) Priorität: 17.04.2014 EP 14165095
(43) Veröffentlichungstag der Anmeldung: 22.02.2017
(73) Patentinhaber: Covestro Deutschland AG, 51373 Leverkusen (DE)
(72) Erfinder: PIELASCH, Andreas, 51427 Bergisch Gladbach (DE); STEINMEISTER, Dirk, 51377 Leverkusen (DE); SCHLEIERMACHER, Stephan, 50259 Pulheim (DE); GU, Henry, Shanghai 201210 (CN)
(74) Vertreter: Levpat
(86) Internationale Anmeldenummer: PCT/EP2015/058118
(87) Internationale Veröffentlichungsnummer: WO 2015/158744

(56) Entgegenhaltungen:
- EP-A1- 0 207 192
- WO-A1-03/018659
- WO-A1-2008/144770

## Beschreibung

Die Erfindung betrifft ein Bindemittel auf Polyurethan-Polyharnstoff-Basis, welches geeignet ist zur Herstellung von Presswerkstoffen aus organischen und/oder anorganischen Materialien, die entsprechende Verwendung dieser Bindemittel sowie die Presswerkstoffe hergestellt mit diesem speziellen Bindemitteln.

Wichtige, zum Einsatz kommende Bindemittel bei der Herstellung von solchen Presswerkstoffen aus organischen (z.B. lignocellulosehaltigen) oder anorganischen (z.B. glaswollehaltigen) Materialien sind Bindemittel auf der Basis von Polyisocyanaten der Diphenylmethanreihe (PMDI). Diese Werkstoffe spielen unter anderem als Holzfaserdämmplatte eine bedeutende Rolle im Bausektor.

PMDI-gebundene Holzfaserdämmplatten (im Weiteren auch genannt: "WFIB") erreichen Wärmeleitzahlen um 40 mW/(m*K). Sie isolieren somit vergleichbar wie die Dämmstoffe Glaswolle und Mineralwolle.

Nach dem Stand der Technik erfolgt die Herstellung harter WFIB in der Regel dadurch, dass Holzfasern mit PMDI-Bindemitteln benetzt, verdichtet und durch Einwirken von Wasserdampf ausgehärtet werden. Dieses Verfahren ist beispielsweise in der DE 10242770 A1 beschrieben. Zur Herstellung flexibler Holzfaserdämmplatten kommen sogenannte Bi-Komponentenfasern in Betracht. Beispielsweise werden nach dem in der EP 2315652 A beschriebenen Verfahren WFIB in Dichten von ca. 50 kg/m³ - 100 kg/m3 hergestellt, die eine sehr weiche fasermattenartige Struktur besitzen. Die Herstellung einer harten Dämmplatte - wie mit PMDI-Bindemitteln - ist mit diesen Fasern jedoch nicht möglich.

Derzeit werden als PMDI-Bindemittel für WFIB reines PMDI, Prepolymere oder frische Gemische auf der Basis aus PMDI und Polyol genutzt.

Die EP 1 330 481 A offenbart Bindemittel-Mischungen auf der Basis von Polyisocyanat-Prepolymeren aus PMDI und Polyoxyalkylenolen mit einem Anteil von mindestens 15% (bevorzugt 50 - 100 %) an Oxyethylen-Struktureinheiten und gibt als deren Vorteil an, dass die verwendeten Holzfasern einen höheren Restfeuchtegehalt besitzen können und trotzdem noch Produkte mit guter Dimensionsstabilität erhalten werden.

Die DE 101 41 209 A1 offenbart Bindemittel auf der Basis von Urethangruppen enthaltenden Prepolymeren, die durch Umsetzung von Polyisocyanaten der Diphenylmethandiisocyanat-Reihe mit hydroxyfunktionellen Polyethern mit einem Ethylenoxid (EO)-Gehalt von mehr als 60 Gew-%, bezogen auf die Gesamtmenge an zur Herstellung der Polyether eingesetzten Alkylenoxiden, erhältlich sind. Als Vorteil wird angegeben, das die Kaltklebefestigkeit bei der Verarbeitung erheblich verbessert wird.

Die DE 3 328 662 A1 offenbart ein Verfahren zur Herstellung von Presswerkstoffen,vorzugsweise Spanplatten, durch Heißverpressen von mit Polyisocyanaten als Bindemittel vermischten Rohstoffen unter Mitverwendung von durch Wärme aktivierbaren Katalysatoren auf der Basis von Ammoniumsalzen. Es wird beschrieben, dass diese z.B. in wässrigen Polyisocyanat-Emulsionen, wie sie unter Zusatz von Emulgatoren wie beispielsweise Polyvinylpyrrolidon erhalten werden, gelöst werden können. Durch die Zugabe der bei Raumtemperatur latenten Katalysatoren kann der Herstellprozess gesteuert werden.

Aufgrund der stark steigenden Rohholznachfrage wächst der Druck, Holzfasern einzusparen. Senkt man jedoch den Fasergehalt pro Volumen eines konventionellen Presswerkstoffs und behält die relative Bindemittelmenge konstant, verliert der Presswerkstoff rasch seinen inneren Zusammenhalt. Seine Schwächung erschwert im Extremfall seinen Transport, die Montage auf der Baustelle und die Belastbarkeit im Einbauzustand. Wichtige quantitative Kriterien, um die Schwächung des WFIB zu beschreiben, sind die Zugfestigkeit und die Druckfestigkeit.

Es stellt sich daher die Aufgabe, ein PMDI-basiertes Bindemittel bereitzustellen, mit dem innerhalb eines Rohdichteniveaus feste Presswerkstoffe mit signifikant besseren Druckfestigkeiten und Zugfestigkeiten gegenüber dem Standardbindemittel erreicht werden, bei gleichbleibend guter, niedriger Wärmeleitzahl. Oder anders ausgedrückt stellt sich die Aufgabe, Bindemittel zur Verfügung zu stellen, welche Holzfaserdämmplatten zu Festigkeiten verhelfen, wie sie bei Standardbindemitteln nur mit einer höheren Dichte erreicht werden können.
Es wurde nun überraschend gefunden, dass sich Holzfaserdämmplatten mit guten Materialeigenschaften, wie z.B. der Zugfestigkeit oder der Druckspannung, herstellen lassen, wenn Bindemittel, welche durch Umsetzung von Polyisocyanaten der Diphenylmethandiisocyanat-Reihe mit hydroxyfunktionellen Polyethern mit einen Ethylenoxid (EO) - Gehalt von mehr als 18 Gew.-%, bevorzugt mehr als 70 Gew.-% und besonders bevorzugt mehr als 90 Gew.-% bezogen auf die Gesamtmenge an zur Herstellung der Polyether eingesetzten Alkylenoxiden, erhältlich sind, eingesetzt werden, wobei die Bindemittel weiterhin 0,1 bis 10 Massenteile, bezogen auf das Gesamtgewicht des Bindemittels, mindestens einer Verbindung A ausgewählt aus der Gruppe der Verbindungen bestehend aus Polyvinylpyrrolidonen mit einem gewichtsmittleren Molekulargewicht von mindestens 1000 g/mol und Silikonen mit einem gewichtsmittleren Molekulargewicht größer 1500 g/mol bis zu 25000 g/mol und einem Ethylenoxid-Gehalt von mindestens 20 Gew.-% enthalten.

Zur Herstellung der Bindemittel werden Polyisocyanate der Diphenylmethandiisocyanat-Reihe eingesetzt, z.B. Polyphenyl-polymethylen-polyisocyanate, wie sie durch AnilinFormaldehyd-Kondensation und anschließende Phosgenierung hergestellt werden ("rohes MDI"). Bevorzugt setzt man als Polyisocyanatkomponente höherkernige Isocyanate der Diphenylmethandiisocyanat-Reihe (PMDI-Typen) ein. Besonders bevorzugt weisen diese einen Gehalt an monomerem Diphenylmethandiisocyanat von weniger als 55 Gew.-% auf. Die Polyurethan-Polyharnstoffe werden durch Umsetzung der Polyisocyanate mit hydroxyfunktionellen Polyethern mit einem EO-Gehalt von mehr als 18 Gew.-%, bevorzugt mehr als 70 Gew.-%, und besonders bevorzugt mehr als 90 Gew.-% bezogen auf die Gesamtmenge an zur Herstellung der Polyether eingesetzten Alkylenoxiden erhalten. Die hydroxyfunktionellen Polyether weisen in der Regel 1 bis 8, bevorzugt 2 bis 6 OH-Gruppen auf. Sie besitzen bevorzugt zahlenmittlere Molekulargewichte von 100 bis 10 000 g/Mol, besonders bevorzugt 150 bis 5 000 g/Mol. Es werden vorzugsweise Polyoxypropylen-polyoxyethylen-polyole eingesetzt. Besonders bevorzugt sind Polyoxyethylen-polyole.

Die hydroxyfunktionellen Polyether können nach bekannten Verfahren, hergestellt werden, beispielsweise durch anionische Polymerisation von Alkylenoxiden in Gegenwart von aktiven Wasserstoffatomen enthaltenden Starterverbindungen. Geeignete Alkylenoxide enthalten 2 bis 4 Kohlenstoffatome im Alkylenrest. Beispiele sind neben Ethylenoxid Tetrahydrofuran, 1,2-Propylenoxid, 1,2- bzw. 2,3-Butylenoxid, vorzugsweise werden Ethylenoxid (EO) und 1,2-Propylenoxid (PO) eingesetzt. Die Alkylenoxide können alternierend nacheinander oder als Mischungen verwendet werden.

Als aktive Wasserstoffatome aufweisende Starterverbindungen werden vorzugsweise Verbindungen mit zahlenmittleren Molekulargewichten von 18 bis 2 000 g/Mol und 1 bis 8 Hydroxylgruppen eingesetzt. Beispiele sind Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Triethanolamin, Ethylendiamin, Toluendiamin oder Wasser. Besonders bevorzugt sind Ethylenglykol, Diethylenglykol und Glycerin. Es können auch oligomere Alkoxylierungsprodukte der zuvor genannten niedermolekularen Starter mit zahlenmittleren Molekulargewichten von 200 bis 2 000 g/Mol als Starterverbindungen eingesetzt werden.

Die Umsetzung von Polyisocyanaten und hydroxyfunktionellen Polyethern erfolgt in der Regel bei Temperaturen von 15 bis 120°C.

Die Umsetzung der einzelnen Komponenten kann über eine Prepolymerreaktion erfolgen, wobei die Polyisocyanate und hydroxyfunktionellen Polyether bevorzugt in solchen Mengenverhältnissen eingesetzt werden, dass das gebildete Prepolymer einen NCO-Gehalt von 20 bis 32 Gew.-%, bevorzugt 21 bis 28 Gew.-% aufweist. Die Komponenten können aber auch erst kurz vor der Applikation auf die zur Herstellung der Presswerkstoffe verwendeten organischen und/oder anorganischen Materialien (im Weiteren genannt "Beleimung") gemischt werden oder einzeln bzw. in beliebiger Kombination gemischt appliziert werden, so dass die Urethanreaktion ganz oder teilweise nach der Beleimung erfolgt.
Die Ausreaktion der Bindemittel zu den Polyurethan-Polyharnstoffen erfolgt im weiteren Herstellprozess der Presswerkstoffe durch Umsetzung mit Wasser / Wasserdampf.

Erfindungsgemäß enthalten die Bindemittel 0,1 bis 10 Massenteile, bezogen auf das Gesamtgewicht des Bindemittels, mindestens einer weiteren Verbindung A, welche ausgewählt ist aus einer oder mehreren Verbindungen der Gruppe der Verbindungen bestehend aus A1) Polyvinylpyrrolidonen mit einem gewichtsmittleren Molekulargewicht von mindestens 1000 g/mol und A2) Silikonen mit einem gewichtsmittleren Molekulargewicht von größer 1500 g/mol. bis zu 25000 g/mol und einem Ethylenoxid-Gehalt von mindestens 20 Gew.-%.

Bei den erfindungsgemäßen Silikonen (A2) handelt es sich um Siloxan-Polyoxyalkylen-Copolymere mit einem Ethylenoxid-Anteil von ≥ 20 % und mit einem gewichtsmittleren Molekulargewicht von 1500 g/mol bis 25000 g/mol, insbesondere um Siloxan-Polyoxyalkylen-Copolymere mit einem Ethylenoxid-Anteil von ≥ 20 Gew.-% und mit einem gewichtsmittleren Molekulargewicht von 2000 g/mol bis 25000 g/mol. In einer weiterhin bevorzugten Ausführungsform handelt es sich bei den Silikonen um Siloxan-Polyoxyalkylen-Copolymere mit einem Ethylenoxid-Anteil von ≥ 40 Gew.-% und mit einem gewichtsmittleren Molekulargewicht von 2000 g/mol bis 15000 g/mol.

Als Polyvinylpyrrolidone (A1) im Sinne dieser Erfindung werden Poly-N-Vinylpyrrolidon oder ein Derivat von Poly-N-Vinylpyrrolidon oder ein Copolymer dieser Verbindungen bezeichnet. Das gewichtsmittlere Molekulargewicht der Polyvinylpyrrolidone weist einen Wert von mindestens 1000 g/mol auf, vorzugsweise 1500 g/mol bis 20000 g/mol und ganz besonders bevorzugt 2500 - 15000 g/mol.
Die Silikone und Polyvinylpyrrolidone können einzeln oder in Kombination eingesetzt werden. Es werden Massenanteile von 0,1 bis 10, bezogen auf das Gesamtgewicht des Bindemittels, besonders bevorzugt im Bereich von 0,1 bis 3 bezogen auf das Gesamtgewicht des Bindemittels, eingesetzt.
Die Silikone und / oder Polyvinylpyrrolidone können der Isocyanatkomponente, dem Prepolymer, der Polyolkomponente oder direkt der Reaktionsmischung zugesetzt werden.
Die erfindungsgemäßen Bindemittel können zusätzlich übliche Additive und/oder Zusatzstoffe wie Paraffine, blockierte Amine, Montanwachse, interne Trennmittel, weiterhin Flammschutzmittel zum Beispiel Ammoniumpolyphoshat sowie Kondensationsharze (Harnstoff-Formaldehyd-, Melamin-Harnstoff-Formaldehyd-, Melamin-Harnstoff-Phenol-Formaldehyd-Leime), Formaldehyd-Fänger (zum Beispiel Harnstoffe) enthalten. Diese werden bevorzugt dem Bindemittelgemisch kurz vor der Beleimung zugesetzt. In einer abweichenden Ausführungsform können sie auch der Polyol-Komponente und/oder dem PMDI zugesetzt werden.

Bei den zur Herstellung der Presswerkstoffe geeigneten Materialien handelt es sich um alle lignocellulosehaltigen Rohstoffe, die mit dem erfindungsgemäßen Bindemittel verklebt werden können, wie beispielsweise Holz, Rinde, Kork, Bagasse, Stroh, Flachs, Bambus, Alfagras, Reisschalen, Sisal- und Kokosfasern, sowie um Recyclate und Rohstoffe auf Kunststoffbasis, wie Polyurethan-Hartschäume, Polyurethan-Integralschäume oder andere Kunststoffe, ferner auch anorganische Rohstoffe oder Recyclate wie zum Beispiel Glaswolle oder Steinwolle. Die zum Verkleben geeigneten Stoffe können dabei in Form von Granulaten, Strands, Spänen, Fasern, Furnieren oder Mehl vorliegen und einen Wassergehalt von z.B. 0 bis 35 Gew.-%, vorzugsweise von 5 bis 25 Gew.-%, aufweisen. Besonders gut eignet sich das erfindungsgemäße Verfahren zur Verarbeitung von lignocellulosehaltigen Rohstoffen.

Die Herstellung der Presswerkstoffe kann mit den dem Fachmann bekannten Standardverfahren erfolgen. In der Regel werden 100 Masseteile der zum Verkleben geeigneten Stoffe mit 1 bis 100 Masseteilen, vorzugsweise 1,5 bis 20 Masseteilen, besonders bevorzugt mit 3,5 bis 15 Masseteilen Bindemittel, versetzt und unter Einwirkung von Hitze (z.B. 70°C bis 250°C) und gegebenenfalls mit bis zu 150 bar Pressdruck, zu Platten oder Formkörpern verpresst.

In bevorzugten Ausführungsformen werden für die Herstellung des erfindungsgemäßen Bindemittelsystems hydroxyfunktionelle Polyether mit einem EO-Gehalt von mehr als 70 Gew.-% sowie Siloxan-Polyoxyalkylen-Copolymeren mit einem Ethylenoxid-Anteil von mehr als 20 Gew.-% und mit einem gewichtsmittleren Molekulargewicht von 1500 g/mol bis 25000 g/mol eingesetzt, oder hydroxyfunktionelle Polyether mit einen EO-Gehalt von mehr als 90 Gew.-% sowie Siloxan-Polyoxyalkylen-Copolymeren mit einem Ethylenoxid-Anteil von ≥ 20 Gew.-% und mit einem gewichtsmittleren Molekulargewicht von 1500 g/mol bis 25000 g/mol eingesetzt. In weiterhin bevorzugten Ausführungsformen werden für die Herstellung des erfindungsgemäßen Bindemittelsystems hydroxyfunktionelle Polyether mit einem EO-Gehalt von mehr als 70 Gew.-% sowie Polyvinylpyrrolidone von 1500 g/mol bis 20000 g/mol eingesetzt, oder hydroxyfunktionelle Polyether mit einem EO-Gehalt von mehr als 90 Gew.-% sowie Polyvinylpyrrolidone von 1500 g/mol bis 20000 g/mol eingesetzt.

### Beispiele

### A. Rohstoffe

- Gutex Thermofiber®: handelsübliche Holzfasern (GUTEX Holzfaserplattenwerk H. Henselmann GmbH + Co KG)
- Desmodur® 1520A31:: Polymeres MDI, NCO% 31,5, dynamische Viskosität 350 mPas bei 25°C (Bayer MaterialScience AG)
- L300:: Polyetherpolyol mit OHZ 190, hergestellt durch Polymerisation von 86,59 % Ethylenoxid und 0,52 % Propylenoxid; gestartet auf 12,89% 1,2-Propandiol; dynamische Viskosität 350 mPas bei 25°C (Bayer MaterialScience AG)
- TEGOSTAB® B 8681:: Polydimethylsiloxan-Polyoxyalkylen-Blockcopolymer (Evonik Industries, gewichtsmittleres MW 630 g/mol, rel. Gew.-anteil Ethylenoxid (¹H-NMR): < 1 %)
- TEGOSTAB® B 8421:: Polydimethylsiloxan-Polyoxyalkylen-Blockcopolymer (Evonik Industries, gewichtsmittleres MW 11994 g/mol, rel. Gew.-anteil Ethylenoxid (¹H-NMR): 62.2 %)
- DC193:: Polydimethylsiloxan-Polyoxyalkylen-Blockcopolymer (Dow Corning, gewichtsmittleres MW 5034 g/mol, rel. Gewichtsanteil Ethylenoxid (¹H-NMR): > 99 %)
- LK443E:: Dibutylmaleate N-Vinyl-2-pyrrolidone-copolymer in Polypropylenglykol (Air Products Corp., gewichtsmittleres MW 6148 g/mol)

Die Molgewichte wurden bestimmt mittels Gelpermeationschromatografie.

### B. Durchführung der Versuche V1 - V7

Die Restfeuchte der Holzfasern wurde bestimmt. Daraus ergab sich die Masse an Holz ohne Feuchtigkeit, im Folgenden "absolut trockene Holzmasse" genannt. Holzfasern mit Restfeuchte werden im Folgenden als "lufttrockene Holzfasern" bezeichnet.

Die Einwaage der Bindemittel bezog sich auf die absolut trockene Holzmasse. Das erforderliche Bindemittel wurde vor Versuchsbeginn aus den in der Tabelle aufgeführten Rohstoffkomponenten manuell vermischt.

Die lufttrockenen Holzfasern wurden in einem Pflugscharmischer durch Zweistoffdüsen mit dem jeweiligen Bindemittel benetzt. Die Holzfasern wurden jeweils 25 s beleimt. Die benetzten Holzfasern wurden analog zu DE10242770B4 zu einem Faserkuchen in der rechteckigen unteren Formhälfte verteilt. Die Form wurde mit einem eintauchenden Deckel so verschlossen, dass die benetzte Holzfaserschüttung auf die gewünschte Plattenrohdichte komprimiert wurde. Boden und Deckel waren dampfdurchlässig. Das Bindemittel in der komprimierten Holzfaserschüttung wurde mittels Wasserdampf, der in vertikaler Richtung durch die gesamte Plattendicke strömte, solange erhitzt, bis der Zieltemperaturbereich zwischen 90°C bis 94°C erreicht worden war. Nach Erreichen des Zieltemperaturbereiches wurde die Dampfwärmezufuhr gestoppt. Nach Abkühlen wurde die Holzfaserdämmplatte entnommen und auf Ausgleichsfeuchte getrocknet.

### C. Messmethoden

### Materialprüfungen:

Messung der Druckspannung: EN 826
Messung der Zugspannung nach EN 1607
Rohdichte: DIN 52182
Wärmeleitzahl: DIN 52616

Gelpermeationschromatografie, Angelehnt an DIN 55672-1: mit Tetrahydrofuran als Eluent, Flussrate 0,6 mL/min, Injektion 100µL, Säulen: kreuzvernetztes Polystyrol-Divinylbenzol, Detektion: Brechungsindex, Molmassenkalibration: mit engverteilten Polystyrol-Standard; ansonsten in Übereinstimmung mit DIN 55672-1.

**Tabelle 2:**

| Versuch | | | V1* | V2 | V3* | V4* | V5 | V6 | V7 |
|---|---|---|---|---|---|---|---|---|---|
| | | | | | | | | | |
| lufttrockene Holzfasern, Charge 1 | | | 2,320 | 2,320 | | | | | |
| lufttrockene Holzfasern, Charge 2 | | | | | 2,282 | 2,282 | 2,282 | 2,282 | 2,282 |
| Bindemittelgemisch | | | 0,215 | 0,215 | 0,254 | 0,254 | 0,254 | 0,254 | 0,254 |

| b) Bindemittelgemisch | | | | | | | | | |
|---|---|---|---|---|---|---|---|---|---|
| Desmodur®1520A31 | | | 0,166 | 0,165 | 0,195 | 0,193 | 0,193 | 0,193 | 0,193 |
| L300 | | | 0,050 | 0,049 | 0,059 | 0,058 | 0,058 | 0,058 | 0,058 |
| Tegostab® B 8681 | | | | | | 0,0029 | | | |
| Tegostab® B8421 | | | | 0,0012 | | | 0,0029 | | |
| DABCO® DC193 | | | | | | | | 0,0029 | |
| LK-443E | | | | | | | | | 0,0029 |

| c) Materialprüfungen | | | | | | | | | |
|---|---|---|---|---|---|---|---|---|---|
| Rohdichte | [kg/m³] | | 69 | 64 | 64 | 64 | 62 | 62 | 64 |
| Druckspannung | [kPa] | | 17 | 20 | 32 | 38 | 45 | 45 | 50 |
| Zugfestigkeit | [kPa] | | 2,1 | 4,4 | | | | | |
| Wärmeleitfähigkeit | [mW/(m*K)] | | 39,3 | 39,5 | | | | | |
| Rohdichte der Platte für WLF | [kg/m³] | | 68 | 63 | | | | | |

| | | | | | | | | | |
|---|---|---|---|---|---|---|---|---|---|
| * Vergleichsbeispiel | | | | | | | | | |

## Patentansprüche

1. Ein Bindemittel-System auf Polyurethan-Polyharnstoff-Basis, welches zur Herstellung von Presswerkstoffen verwendet werden kann, aus einem Polyisocyanat, das ein Isomerengemisch und höhere Homologe von Diphenylmethandiisocyanat umfasst, und mindestens einem hydroxyfunktionellen Polyether mit einem Ethylenoxid-Gehalt von mehr als 18 Gew.-%,
**gekennzeichnet dadurch,**
**dass** das Bindemittel-System 0,1 bis 10 Massenteile, bezogen auf das Gesamtgewicht des Bindemittels, mindestens einer Verbindung A enthält, die ausgewählt aus einer oder mehreren Verbindungen der Gruppe bestehend aus
A1) Poly-N-Vinylpyrrolidon, einem Derivat von Poly-N-Vinylpyrrolidon und einem Copolymer von N-Vinylpyrrolidon mit einem gewichtsmittleren Molekulargewicht von mindestens 1000 g/mol und
A2) Silikonen mit einem gewichtsmittleren Molekulargewicht größer 1500 g/mol bis zu 25000 g/mol und einem Ethylenoxid-Gehalt von mindestens 20 Gew.-%.

2. Bindemittel-System gemäß Anspruch 1, wobei die Verbindungen A2) ein gewichtsmittleres Molekulargewicht von bis zu 15000 g/mol, und die Verbindungen A1) ein gewichtsmittleres Molekulargewicht von 1500 g/mol bis 20000 g/mol aufweisen.

3. Bindemittel-System gemäß Anspruch 2, wobei das Polyoxyethylenpolyol einen Ethylenoxid-Gehalt von mehr als 70 Gew.-% aufweist.

4. Verfahren zur Herstellung von Presswerkstoffen, bei dem mit dem Bindemittel-System gemäß einem der Ansprüche 1 bis 3 beleimte organische und/oder anorganische Materialien verpresst werden.

5. Verwendung von Bindemitteln gemäß einem der Ansprüche 1 bis 3 zur Herstellung von Presswerkstoffen aus organischen und/oder anorganischen Materialien.

## Claims

1. A polyurethane-polyurea-based binder system which can be used for the production of press materials, made of a polyisocyanate comprising an isomer mixture and comprising higher homologues of diphenylmethane diisocyanate and of at least one hydroxy-functional polyether with more than 18% by weight ethylene oxide content,
**characterized in that**
the binder system comprises 0.1 to 10 parts by mass, based on the total weight of the binder of at least one compound A selected from one or more compounds of the group consisting of
A1) poly-N-vinylpyrrolidone, a derivative of poly-N-vinylpyrrolidone, and a copolymer of N-vinylpyrrolidone with weight-average molar mass at least 1000 g/mol, and
A2) silicones with weight-average molar mass greater than 1500 g/mol up to 25 000 g/mol and ethylene oxide content of at least 20% by weight

2. Binder system according to Claim 1, where the weight-average molar mass of the compounds A2) is up to 15 000 g/mol, and the weight-average molar mass of the compounds A1) is from 1500 g/mol to 20 000 g/mol.

3. Binder system according to Claim 2, where the ethylene oxide content of the polyoxyethylene polyol is more than 70% by weight.

4. Process for the production of press materials where glued organic and/or inorganic materials are pressed with the binder system according to any of Claims 1 to 3.

5. Use of binders according to any of Claims 1 to 3 for the production of press materials made of organic and/or inorganic materials.

## Revendications

1. Système de liant à base de polyuréthane-polyurée, qui peut être utilisé pour la fabrication de matériaux pressés, constitué par un polyisocyanate, qui comprend un mélange d'isomères et des homologues supérieurs de diisocyanate de diphénylméthane, et au moins un polyéther à fonction hydroxy ayant une teneur en oxyde d'éthylène de plus de 18 % en poids,
**caractérisé en ce que**
le système de liant contient 0,1 à 10 parties en poids, par rapport au poids total du liant, d'au moins un composé A, qui est choisi parmi un ou plusieurs composés du groupe constitué par :
A1) la poly-N-vinylpyrrolidone, un dérivé de poly-N-vinylpyrrolidone et un copolymère de N-vinylpyrrolidone ayant un poids moléculaire moyen en poids d'au moins 1 000 g/mol, et
A2) les silicones ayant un poids moléculaire moyen en poids de plus de 1 500 g/mol à 25 000 g/mol et une teneur en oxyde d'éthylène d'au moins 20 % en poids.

2. Système de liant selon la revendication 1, dans lequel les composés A2) présentent un poids moléculaire moyen en poids de jusqu'à 15 000 g/mol et les composés A1) présentent un poids moléculaire moyen en poids de 1 500 g/mol à 20 000 g/mol.

3. Système de liant selon la revendication 2, dans lequel le polyoxyéthylène-polyol présente une teneur en oxyde d'éthylène de plus de 70 % en poids.

4. Procédé de fabrication de matériaux pressés, selon lequel des matériaux organiques et/ou inorganiques encollés avec le système de liant selon l'une quelconque des revendications 1 à 3 sont pressés.

5. Utilisation de liants selon l'une quelconque des revendications 1 à 3 pour la fabrication de matériaux pressés à partir de matériaux organiques et/ou inorganiques.
